# EUROPEAN PATENT APPLICATION

(11) **EP 4 119 262 A1**
(43) Date of publication of application: **18.01.2023**
(21) Application number: 21768732.6
(22) Date of filing: 11.03.2021
(51) Int. Cl.: B22F 1/00, B22F 9/02, B22F 9/04, C22C 45/02, C22C 38/00, H01F 41/02, H01F 1/057, B22F 3/00, B22F 3/02

(54) **IRON BASE RARE EARTH BORON-BASED ISOTROPIC MAGNET ALLOY**

(30) Priority: 12.03.2020 JP 2020042793
(71) Applicant: Murata Manufacturing Co., Ltd., Nagaokakyo-shi, Kyoto 617-8555 (JP)
(72) Inventor: KANEKIYO, Hirokazu, Kyoto-shi, Kyoto 600-8813 (JP); TAKAYAMA, Kazuhiro, Nagaokakyo-shi, Kyoto 617-8555 (JP); YAMAZAKI, Takashi, Nagaokakyo-shi, Kyoto 617-8555 (JP)
(74) Representative: Reeve, Nicholas Edward
(86) International application number: PCT/JP2021/009933
(87) International publication number: WO 2021/182591

(57) **Abstract**

An iron-based rare earth boron-based isotropic magnet alloy, which has an alloy composition having a composition of composition formula T_{100-x-y-z}(B₁₋ₙCₙ)ₓRE_{y}M_{z} (T is selected from the group consisting of Fe, Co, and Ni, and is one or more element transition metal elements necessarily containing Fe, RE is one or more rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, and 0.0 ≤ n ≤ 0.5, and has a metal structure containing an RE₂Fe₁₄B-type tetragonal compound with an average crystal grain size of 10 nm or more and less than 70 nm as a main phase, in which a grain boundary phase surrounding the main phase is present, while having a B-containing concentration lower than stoichiometric composition of the RE₂Fe₁₄B-type tetragonal compound.

## Description

### Technical Field

The present invention relates to an iron-based rare earth boron-based isotropic magnet alloy, a method for manufacturing an iron-based rare earth boron-based isotropic magnet alloy, and a method for manufacturing a resin-bonded permanent magnet.

### Background Art

In recent years, fine crystal type isotropic magnets composed of a hard magnetic phase such as Nd-Fe-B or Sm-Fe-N composed of fine crystal grains having an order size from nanometers to submicrometers, and nanocomposite type isotropic magnets (hereinafter, referred to as a "nanocomposite magnet") in which a hard magnetic phase such as Nd-Fe-B or Sm-Fe-N composed of fine crystal grains and a soft magnetic phase such as an Fe-B phase or an α-Fe phase are present in the same metal structure have been developed. Since these rare earth iron-based isotropic magnets composed of crystal grains of an order size from nanometers to submicrometers are fine crystal grains, it has been revealed by computer simulations and the like applying micromagnetics that the respective crystal grains are magnetically bonded by exchange interaction, in addition to the magnetostatic interaction, to exhibit excellent magnet properties, and it has been put into practical use as a high-performance permanent magnet material.

Hitherto, the fine crystal type rare earth iron-based isotropic magnet has been utilized mainly in the electronic component industry as a representative for optical drives, spindle motors for hard disks, vibration motors for mobile phones (pager motors), various sensors, and the like, as a net shape magnet with a high degree of freedom in shape by a resin binding type magnet (commonly called "bonded magnet") obtained by pulverizing the fine crystal type rare earth iron-based isotropic magnet to an average grain size of about 50 µm or more and 200 µm or less and then mixing it with an epoxy resin-based thermosetting resin or a thermoplastic resin such as a nylonbased thermoplastic resin and polyphenylene sulfide (PPS) by taking advantage of the property of isotropy. In recent years, due to high magnetic properties of a fine crystal type rare earth iron-based isotropic magnet, as a brushless DC motor of about 1 horsepower (750 W) or less, development for automobiles (also including electric vehicles and hybrid vehicles) and white goods is expected.

In particular, in order to improve the performance and efficiency of a small motor of several 100 W class, a shift from a brushed motor using a conventional ferrite magnet to a brushless DC motor using a bonded magnet has progressed, and a magnet material for a bonded magnet having more excellent residual magnetic flux density Br, intrinsic coercive force HcJ, and maximum energy product (BH) max is required for a bonded magnet using a fine crystal type rare earth iron-based isotropic magnet material that has been applied to a spindle motor, a vibration motor, and the like.

In order to meet this magnetic property requirement, it is necessary to increase the volume ratio of the ferromagnetic phase exhibiting hard magnetism or soft magnetism responsible for magnetic properties to the maximum and to minimize the volume ratio of the nonmagnetic phase forming a grain boundary of the hard magnetic phase. For example, in an isotropic rare earth iron boron-based magnet material, a RE₂Fe₁₄B type (RE is a rare earth element) compound which is a hard magnetic phase is contained as a main phase, and a nonmagnetic grain boundary phase containing boron surrounding the main phase is present, so that magnetic mutual interaction between main phase grains is adjusted, and expression of an intrinsic coercive force HcJ of 700 kA/m or more applicable to various high-performance motors is obtained. In such a state, it is necessary to reduce the content ratio of boron in order to increase the volume ratio of the RE₂Fe₁₄B-type compound as a hard magnetic phase. However, if the content ratio of boron is excessively reduced, the residual magnetic flux density Br and the maximum energy product (BH) max are reduced due to reduction in squareness of demagnetization curve. Therefore, there is no practical material in which the content ratio of boron is 0.9 mass% or less, and an isotropic rare earth iron boron-based magnet material capable of reducing the content concentration of boron and realizing excellent magnetic properties is expected.

An isotropic magnet having, as a main phase, an Nd₂Fe₁₄B-type tetragonal compound composed of fine crystal grains expected to have high magnetic properties has, as a basic configuration, a stoichiometric composition of Nd: Fe: B = 11.76: balance: 5.88, but in order to achieve a residual magnetic flux density Br ≥ 0.85 T applicable to various high-performance motors, it is necessary to satisfy Nd ≤ 11.76 atom% and B ≤ 5.88 atom%. However, in this composition range, the intrinsic coercive force HcJ of 700 kA/m or more required for development for automobiles (also including electric vehicles and hybrid vehicles) and white goods as a brushless DC motor of about 1 horsepower (750 W) or less cannot be obtained.

In addition, similarly, in the isotropic iron-based rare earth-based nanocomposite magnet alloy having the Nd₂Fe₁₄B-type tetragonal compound as a main phase, the Nd₂Fe₁₄B phase and the α-Fe phase or the Fe-B phase are mixed in the same metal structure with a crystal grain size on the order of nanometers, so that the Nd₂Fe₁₄B phase and the α-Fe phase or the Fe-B phase behave as if they are an integrated magnet by exchange interaction acting between the crystal grains, and thus excellent permanent magnet properties are obtained. However, since the abundance ratio of the RE₂Fe₁₄B-type compound responsible for the intrinsic coercive force cannot be improved, no RE-Fe-B-based isotropic permanent magnet material exhibiting sufficient magnetic properties has been found.

Patent Literature 1 discloses an anisotropic sintered magnet having an RE₂Fe₁₄B tetragonal crystal structure as a main phase, but the magnet has a metal structure composed of RE₂Fe₁₄B tetragonal crystal grains on the order of micrometers, and is a magnet that exhibits good magnetic properties by aligning magnetic moments in the C-axis direction of the RE₂Fe₁₄B tetragonal crystal by magnetic orientation, but good magnetic properties cannot be obtained as an isotropic magnet in which the magnetic moments are randomly arranged, and the magnet cannot be used as a practical magnet.

Patent Literature 2 discloses an isotropic permanent magnet having, as a main phase, a hard magnetic phase having an RE₂Fe₁₄B tetragonal crystal structure composed of at least 10 atom% of a rare earth element, about 0.5 atom% or more and about 10 atom% or less of boron, and a balance iron, in which a high intrinsic coercive force HcJ of 1460 kA/m at the maximum is obtained, but the grain size of the RE₂Fe₁₄B type crystal grains is 20 nm or more and 400 nm or less, including up to crystal grains exceeding the single magnetic domain crystal grain size of the RE₂Fe₁₄B type crystal grains. As a result, the magnetization decreases, and even in the example in which the best magnetic properties are obtained, the residual magnetic flux density Br remains at a maximum of 0.83 T and the maximum energy product (BH) max remains at a maximum of 103 kJ/m³. Accordingly, magnetic properties required for development for automobiles (also including electric vehicles and hybrid vehicles) and white goods as a brushless DC motor of about 1 horsepower (750 W) or less are not realized.

Patent Literature 3 and Patent Literature 4 disclose iron-based rare earth-based isotropic nanocomposite magnets. Since these iron-based rare earth-based isotropic nanocomposite magnets mainly contain an α-Fe phase as a soft magnetic phase, there is a possibility that a high residual magnetic flux density Br of 0.9 T or more is obtained, but since the squareness of the demagnetization curve is poor and demagnetization resistance and heat resistance are poor, they are not suitable as permanent magnet materials used for automobiles and white goods.

On the other hand, Patent Literature 5 discloses that in an iron-based rare earth-based isotropic nanocomposite magnet mainly containing an iron-based boride phase as a soft magnetic phase, precipitation and growth of an α-Fe phase can be suppressed in a cooling process of a molten alloy by adding Ti, and precipitation and growth of an Nd₂Fe₁₄B phase can be preferentially progressed. However, Ti is easily bonded to boron (B), and crystallizes a TiB₂ phase in the process of crystallization, so that the absolute amount of boron required for generating the Nd₂Fe₁₄B phase as the main phase decreases, and there is a problem that the intrinsic coercive force HcJ expected from the content concentration of the rare earth element cannot be obtained.

Patent Literature 6 discloses an iron-based rare earth-based isotropic nanocomposite magnet mainly containing an iron-based boride phase as a soft magnetic phase, and teaches that the following effects are obtained by adding Ti and carbon (C).
1. The liquidus temperature of molten alloy decreases by 5°C or more (for example, about 10°C or more and about 40°C or less). When the liquidus temperature of molten alloy is lowered by addition of carbon, crystallization of a coarse TiB₂ phase and the like is suppressed even if the molten metal temperature is lowered accordingly, so that the molten metal viscosity hardly increases. As a result, a stable molten metal flow can be continuously formed during a quenching step of the molten alloy.
2. When the molten metal temperature decreases, sufficient cooling can be achieved on the surface of a cooling roll, so that winding on the cooling roll can be prevented, and a rapidly solidified alloy structure can be uniformly refined.
3. Since the (B + C) concentration is high and amorphous forming ability is high, a fine metal structure is easily obtained even when the molten metal cooling rate is set to a relatively low value of about 10^{2°}C/sec or more and 10^{4°}C/sec or less. Therefore, it is possible to prepare a quenched alloy containing 60% or more of the Nd₂Fe₁₄B phase in volume ratio without precipitating a coarse α-Fe phase.

As described above, in the iron-based rare earth-based isotropic nanocomposite magnet requiring Ti addition as described in Patent Literature 6, it is considered that excellent permanent magnet properties are obtained by coexistence of a hard magnetic phase having a uniform and fine Nd₂Fe₁₄B-type crystal structure and a soft magnetic phase composed of an Fe phase and an Fe-B phase in the same metal structure. However, Ti, which is an essential element, is a nonmagnetic element, and in addition, Ti enters neither the Nd₂Fe₁₄B phase nor the Fe phase and the Fe-B phase as a compound and is scattered at grain boundaries, and as a result, the magnetization decreases, and Ti cannot realize sufficient magnetic properties.

### Citation List

### Patent Literature

[Patent Literature 1]
   Japanese Patent Unexamined Publication No. 59-46008 bulletin
[Patent Literature 2]
   Japanese Patent Unexamined Publication No. 60-9852 bulletin
[Patent Literature 3]
   Japanese Patent Unexamined Publication No. 8-162312 bulletin
[Patent Literature 4]
   Japanese Patent Unexamined Publication No. 10-53844 bulletin
[Patent Literature 5]
   Japanese Patent Unexamined Publication No. 2002-175908 bulletin
[Patent Literature 6]
   Japanese Patent Unexamined Publication No. 2003-178908 bulletin

### Summary of Invention

### Technical Problem

In order to enable application to various high-performance motors, the intrinsic coercive force HcJ ≥ 700 kA/m is a necessary condition, thus it is necessary to set the constituent ratio of the RE₂Fe₁₄B phase as a main phase to 70 vol% or more. At the same time, in order to obtain a desired residual magnetic flux density Br ≥ 0.85 T, there is a problem that the size of crystal grains is refined to an average crystal grain size of 10 nm or more and less than 70 nm so that exchange interaction works effectively, in order to utilize each intergranular interaction to the maximum while suppressing nonmagnetic additive elements that do not form a compound, such as Ti, as much as possible.

In addition, the intrinsic coercive force HcJ and the residual magnetic flux density Br are in a trade-off relationship, and when the volume ratio of the main phase composed of the RE₂Fe₁₄B-type hard magnetic compound is increased in order to improve the intrinsic coercive force HcJ, a decrease in the residual magnetic flux density Br is caused. Therefore, in order to suppress the decrease in the residual magnetic flux density Br, it is necessary to form the grain boundary phase adjacent to the main phase as a hard magnetic or semi-hard magnetic phase having high magnetization and a certain degree of anisotropic magnetic field in addition to the increase in exchange interaction acting between the grains due to the uniform and fine metal structure.

The present inventors have considered that it is possible to obtain a permanent magnet material having excellent magnet properties that have not been conventionally obtained, by making the grain boundary phase adjacent to the main phase composed of the RE₂Fe₁₄B-type hard magnetic compound hard magnetic or semi-hard magnetic, but it has been found that it is difficult to suppress the decrease in the residual magnetic flux density Br while maintaining the high intrinsic coercive force HcJ with the additive element such as Ti as described above.

The present invention has been made in view of the above circumstances, and a main object thereof is to provide an iron-based rare earth boron-based isotropic magnet alloy, which can improve a residual magnetic flux density, intrinsic coercive force HcJ, and maximum energy product (BH) max, which are magnetic properties necessary for development for automobiles (also including electric vehicles and hybrid vehicles) and white goods as a brushless DC motor of about 1 horsepower (750 W) or less, a method for manufacturing the iron-based rare earth boron-based isotropic magnet alloy, and a method for manufacturing a resin-bonded permanent magnet containing the iron-based rare earth boron-based isotropic magnet alloy.

### Solution to Problem

An iron-based rare earth boron-based isotropic magnet alloy of the present invention has, in a first aspect, an alloy composition having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5, and has a metal structure finer than a single magnetic domain critical diameter of an RE₂Fe₁₄B-type tetragonal compound having the RE₂Fe₁₄B-type tetragonal compound with an average crystal grain size of 10 nm or more and less than 70 nm as a main phase, while having a B-containing concentration lower than stoichiometric composition of the RE₂Fe₁₄B-type tetragonal compound.

An iron-based rare earth boron-based isotropic magnet alloy of the present invention has, in a second aspect, an alloy composition having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5, and has a metal structure having an RE₂Fe₁₄B-type tetragonal compound with an average crystal grain size of 10 nm or more and less than 70 nm as a main phase, in which a grain boundary phase surrounding the main phase is present, while having a B-containing concentration lower than stoichiometric composition of the RE₂Fe₁₄B-type tetragonal compound.

A method for manufacturing an iron-based rare earth boron-based isotropic magnet alloy of the present invention includes preparing a molten alloy having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element substantially not containing La and Ce, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5, and injecting the molten alloy onto a surface of a rotating roll containing Cu, Mo, W or an alloy containing at least one of these metals as a main component, at an average metal tapping rate of 200 g/min or more and less than 2000 g/min per hole of an orifice arranged at a tip of a nozzle to prepare a rapidly solidified alloy having 1 vol% or more of either a crystal phase or an amorphous phase containing an RE₂Fe₁₄B phase.

A method for manufacturing a resin-bonded permanent magnet of the present invention, in a first aspect, includes preparing the iron-based rare earth boron-based isotropic magnet alloy powder manufactured by the method for manufacturing an iron-based rare earth boron-based isotropic magnet alloy; and adding a thermosetting resin to the iron-based rare earth boron-based isotropic magnet alloy powder, then filling a molding die with a mixture, forming a compression molded body by compression molding, and then performing heat treatment at a temperature equal to or higher than a polymerization temperature of the thermosetting resin.

A method for manufacturing a resin-bonded permanent magnet of the present invention, in a second aspect, includes preparing the iron-based rare earth boron-based isotropic magnet alloy powder manufactured by the method for manufacturing an iron-based rare earth boron-based isotropic magnet alloy; and adding a thermoplastic resin to the iron-based rare earth boron-based isotropic magnet alloy powder to prepare an injection molding compound, and then performing injection molding.

### Advantageous Effects of Invention

According to the present invention, it is possible to provide an iron-based rare earth boron-based isotropic magnet alloy, which can improve residual magnetic flux density Br, intrinsic coercive force HcJ, and maximum energy product (BH) max, which are magnetic properties necessary for development for automobiles (also including electric vehicles and hybrid vehicles) and white goods as a brushless DC motor of about 1 horsepower (750 W) or less. Further, according to the present invention, it is possible to provide a method for manufacturing the iron-based rare earth boron-based isotropic magnet alloy. Furthermore, according to the present invention, it is possible to provide a method for manufacturing a resin-bonded permanent magnet containing the iron-based rare earth boron-based isotropic magnet alloy.

### Brief Description of Drawings

FIG. 1 is a cross-sectional view schematically showing an example of an iron-based rare earth boron-based isotropic magnet alloy of the present invention.
FIG. 2(a) is an apparatus configuration diagram of a heat treatment furnace for realizing flash annealing, and FIG. 2(b) is a diagram showing a state of a rapidly solidified alloy moving in a furnace core tube.
FIG. 3 is a conceptual diagram of a thermal history by flash annealing performed in the present invention.
FIG. 4 is a bright field image and elemental mapping obtained by observing an iron-based rare earth boron-based isotropic magnet alloy obtained in Example 13 with a transmission electron microscope.
FIG. 5 is a bright field image and elemental mapping obtained by observing an iron-based rare earth boron-based isotropic magnet alloy obtained in Comparative Example 38 with a transmission electron microscope.
FIG. 6 is a powder X-ray diffraction profile of a rapidly solidified alloy obtained in Example 13.
FIG. 7 is a powder X-ray diffraction profile of a rapidly solidified alloy after flash annealing (crystallization heat treatment) obtained in Example 13.
FIG. 8 is a powder X-ray diffraction profile of a rapidly solidified alloy after flash annealing (crystallization heat treatment) obtained in Comparative Example 38.

### Description of Embodiments

Hereinafter, an iron-based rare earth boron-based isotropic magnet alloy of the present invention, a method for manufacturing an iron-based rare earth boron-based isotropic magnet alloy of the present invention, and a method for manufacturing a resin-bonded permanent magnet of the present invention will be described. Note that the present invention is not limited to the following configuration, and may be appropriately modified without departing from the gist of the present invention. The present invention also includes a combination of a plurality of preferred configurations described below.

An iron-based rare earth boron-based isotropic magnet alloy of the present invention has, in a first aspect, an alloy composition having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5, and has a metal structure finer than the single magnetic domain critical diameter of an RE₂Fe₁₄B-type tetragonal compound having the RE₂Fe₁₄B-type tetragonal compound with an average crystal grain size of 10 nm or more and less than 70 nm as a main phase, while having a B-containing concentration lower than stoichiometric composition of the RE₂Fe₁₄B-type tetragonal compound.

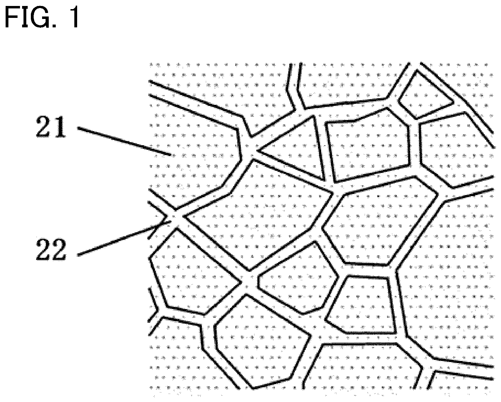

The iron-based rare earth boron-based isotropic magnet alloy of the present invention has, in a second aspect, an alloy composition having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5, and has a metal structure having the RE₂Fe₁₄B-type tetragonal compound with an average crystal grain size of 10 nm or more and less than 70 nm as a main phase, in which a grain boundary phase surrounding the main phase is present, while having a B-containing concentration lower than stoichiometric composition of the RE₂Fe₁₄B-type tetragonal compound. An example of the iron-based rare earth boron-based isotropic magnet alloy of the present invention as above is shown in FIG. 1.

It is preferable that the iron-based rare earth boron-based isotropic magnet alloy of the present invention, in the second aspect, has a metal structure finer than the single magnetic domain critical diameter of the RE₂Fe₁₄B-type tetragonal compound, in which the grain boundary phase surrounding the main phase composed of the RE₂Fe₁₄B-type tetragonal compound contains RE and Fe as main components.

In the iron-based rare earth boron-based isotropic magnet alloy of the present invention, in the second aspect, the grain boundary phase containing RE and Fe as main components and surrounding the main phase composed of the RE₂Fe₁₄B-type tetragonal compound is preferably a ferromagnetic phase.

In the iron-based rare earth boron-based isotropic magnet alloy of the present invention, in the second aspect, the width of the grain boundary phase containing RE and Fe as main components and surrounding the main phase composed of the RE₂Fe₁₄B-type tetragonal compound is preferably 1 nm or more and less than 10 nm.

The iron-based rare earth boron-based isotropic magnet alloy of the present invention has a low boron content concentration, and the boron (B) content concentration in an alloy composition range in which a magnet alloy having an RE₂Fe₁₄B phase as a main phase is obtained is set to a range of 4.2 atom% or more and 5.6 atom% or less that is lower than stoichiometric composition of the RE₂Fe₁₄B phase. Furthermore, in the iron-based rare earth boron-based isotropic magnet alloy of the present invention, the rare earth element (RE) and iron (Fe) are brought into a surplus state in the same alloy structure, so that a grain boundary phase containing surplus RE and Fe which are not necessary for generation of the RE₂Fe₁₄B phase as the main phase is formed. As a result, the iron-based rare earth boron-based isotropic magnet alloy of the present invention has a unique fine metal structure in which a grain boundary phase with a width of 1 nm or more and less than 10 nm containing RE and Fe as main components and surrounding the RE₂Fe₁₄B phase with an average crystal grain size of 10 nm or more and less than 70 nm is present.

The present inventors have found that by realizing the above unique uniform and fine metal structure, the RE₂Fe₁₄B phase as the main phase and the grain boundary phase having RE and Fe as main components, which is uniformly present around the main phase, are bound by a strong exchange interaction in addition to a magnetostatic interaction, and behave as if they are an integrated hard magnetic phase with the grain boundary phase (for example, α-Fe phase) having saturation magnetization equal to or higher than that of the main phase, thereby obtaining a high residual magnetic flux density Br and a high maximum energy product (BH) max by improving squareness of demagnetization curve without impairing the intrinsic coercive force HcJ of the RE₂Fe₁₄B phase. In particular, it is considered that having the grain boundary phase as described above contributes to developing a high intrinsic coercive force HcJ, and it is considered that having the small average crystal grain size as described above contributes to developing a high residual magnetic flux density Br and a high coercive force HcJ.

When the boron content concentration is less than 4.2 atom%, the generation of the RE₂Fe₁₄B phase as the main phase is inhibited, so that both the intrinsic coercive force HcJ and the residual magnetic flux density Br significantly decrease. In addition, when the boron content concentration exceeds 5.6 atom%, a metal structure in which an RE₂Fe₁₄B single phase is present or a nonmagnetic B-rich phase is present around the RE₂Fe₁₄B phase is obtained, and thus, although a high intrinsic coercive force HcJ can be maintained, the residual magnetic flux density Br and the maximum energy product (BH) max are not increased, and sufficient magnetic properties, for example, magnetic properties of a residual magnetic flux density Br of 0.85 T or more, an intrinsic coercive force HcJ of 700 kA/m or more and less than 1400 kA/m, and a maximum energy product (BH) max of 120 kJ/m³ or more are not be obtained.

On the other hand, when the boron content concentration is set to 4.2 atom% or more and 5.6 atom% or less, the grain boundary phase containing RE and Fe as main components is uniformly generated without impairing the generation of the RE₂Fe₁₄B phase as the main phase, and thus the above magnetic properties are considered to be obtained.

Patent Literature 2, Patent Literature 3, Patent Literature 4, Patent Literature 5, and Patent Literature 6 all disclose a microcrystalline isotropic permanent magnet material in which an RE₂Fe₁₄B-type tetragonal compound bears intrinsic coercive force HcJ. However, the magnitude of the intrinsic coercive force HcJ mainly depends on the volume ratio of the RE₂Fe₁₄B-type tetragonal compound, and the intrinsic coercive force HcJ increases when the volume ratio of the RE₂Fe₁₄B phase is high, and the intrinsic coercive force HcJ decreases when the volume ratio of the RE₂Fe₁₄B phase is low.

On the other hand, in the anisotropic RE₂Fe₁₄B sintered magnet described in Patent Literature 1, heavy rare earth elements such as Dy and Tb are included in the RE₂Fe₁₄B-type tetragonal compound as the main phase, and the anisotropic magnetic field of the RE₂Fe₁₄B-type tetragonal compound is increased, thereby realizing improvement of the intrinsic coercive force HcJ. Although both of the fine isotropic permanent magnet material and the anisotropic sintered magnet have the RE₂Fe₁₄B-type tetragonal compound as the main phase, the main phase size of the anisotropic sintered magnet is about 1 µm or more and 10 µm or less, and is equal to or more than the single magnetic domain critical diameter of the RE₂Fe₁₄B-type tetragonal compound. Therefore, although the anisotropic sintered magnet is in a multi-magnetic domain state before magnetization, magnetic moments are aligned in the magnetization direction (C-axis direction) by magnetization, and the permanent magnet properties are exhibited by bringing the anisotropic sintered magnet into a single magnetic domain state. Thus, the intrinsic coercive force HcJ of the anisotropic sintered magnet represents an ability to maintain a state in which the magnetic moments are aligned in the same direction. Therefore, the intrinsic coercive force HcJ is improved by increasing the anisotropic magnetic field of the RE₂Fe₁₄B-type tetragonal compound.

In the iron-based rare earth boron-based isotropic magnet alloy having a low boron content concentration of the present invention, by realizing a unique metal structure having a grain boundary phase containing RE and Fe as main components, when a heavy rare earth element such as Dy is added to the alloy composition, the anisotropic magnetic field of not only the RE₂Fe₁₄B-type tetragonal compound as the main phase but also the grain boundary phase is improved. Therefore, it has been found that demagnetization of magnetic moment of the main phase with a single magnetic domain crystal grain size or less can be suppressed by the grain boundary phase, and improvement of the intrinsic coercive force HcJ by addition of the heavy rare earth element, which was not effective in the conventional fine crystal type isotropic RE₂Fe₁₄B permanent magnet material, can be realized. Accordingly, according to the iron-based rare earth boron-based isotropic magnet alloy of the present invention, a high-performance isotropic RE₂Fe₁₄B permanent magnet that has a high intrinsic coercive force HcJ and has not been conventionally obtained is obtain without causing a significant decrease in residual magnetic flux density Br.

In addition, it has been found that in the iron-based rare earth boron-based isotropic magnet alloy having a low boron content concentration of the present invention, improvement of the intrinsic coercive force HcJ is realized without causing a decrease in the residual magnetic flux density Br by substituting a part of the boron (B) with carbon (C), and further, the effect of improving the intrinsic coercive force HcJ can be increased by combining the substitution with the carbon (C) and the addition of a heavy rare earth element.

### [Alloy composition]

The alloy composition of the iron-based rare earth boron-based isotropic magnet alloy of the present invention has a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5. The composition of the entire magnet alloy according to the present invention is analyzed by ICP mass spectrometry. In addition, a combustioninfrared absorption method may be used in combination as necessary.

Transition metal element T containing Fe as an essential element occupies the remainder of the content of the above-described elements. Even if a part of Fe is substituted with one or two of Co and Ni which are ferromagnetic elements like Fe, desired hard magnetic properties can be obtained. However, when the amount of substitution for Fe exceeds 30%, the magnetic flux density is significantly reduced, and therefore the amount of substitution is preferably in the range of 0% or more and 30% or less. It is to be noted that the addition of Co not only contributes to improvement of magnetization, but also has an effect of lowering the viscosity of the molten metal to stabilize the metal tapping rate from a nozzle at the time of quenching the molten metal. Therefore, the amount of substitution by Co is more preferably 0.5% or more and 30% or less, and from the viewpoint of cost effectiveness, the amount of substitution by Co is still more preferably 0.5% or more and 10% or less.

In the iron-based rare earth boron-based isotropic magnet alloy of the present invention, when the composition ratio x of B + C is less than 4.2 atom%, the amount of B + C required for producing an RE₂Fe₁₄B-type tetragonal compound cannot be secured, and the magnetic properties are deteriorated and amorphous forming ability is greatly deteriorated, so that an α-Fe phase is precipitated during molten metal rapid solidification, and as a result, the squareness of the demagnetization curve is impaired. In addition, when the composition ratio x of B + C exceeds 5.6 atom%, a grain boundary phase containing RE and Fe as main components is not generated, and there is a possibility that the above-described magnetic properties cannot be secured. Accordingly, the composition ratio x is limited to a range of 4.2 atom% or more and 5.6 atom% or less. The composition ratio x is preferably 4.2 atom% or more and 5.2 atom% or less, and more preferably 4.4 atom% or more and 5.0 atom% or less.

In the iron-based rare earth boron-based isotropic magnet alloy of the present invention, by substituting a part of B with C, a melting point of the molten alloy is lowered, and the wear amount of a refractory used at the time of rapid solidification is reduced, so that the process cost related to rapid solidification can be reduced, and the effect of improving the intrinsic coercive force HcJ is obtained. However, it is not preferable that the substitution rate of C for B exceeds 50% since the amorphous forming ability is greatly deteriorated. Accordingly, the substitution rate of C for B is limited to a range of 0% or more and 50% or less, that is, 0.0 ≤ n ≤ 0.5. From the viewpoint of the effect of improving the intrinsic coercive force HcJ, the substitution rate of C for B is preferably 2% or more and 30% or less, and more preferably 3% or more and 15% or less.

In the iron-based rare earth boron-based isotropic magnet alloy of the present invention, when the composition ratio y of at least one rare earth element RE necessarily containing at least Nd among Nd and Pr is less than 11.5 atom%, a grain boundary phase containing RE and Fe as main components is not generated, and there is a possibility that the above-described magnetic properties cannot be secured. In addition, when the composition ratio y exceeds 13.0 atom%, the magnetization decreases. Accordingly, the composition ratio y is limited to a range of 11.5 atom% or more and 13.0 atom% or less. Moreover, the composition ratio y is preferably 11.76 atom% or more and 13.0 atom% or less, which is the stoichiometric composition of the RE₂Fe₁₄B-type tetragonal compound, from the viewpoint of ensuring stability of the intrinsic coercive force HcJ, and more preferably 11.76 atom% or more and 12.5 atom% or less from the viewpoint of ensuring a high residual magnetic flux density Br.

Further, the rare earth RE may be RE_{y} = (Nd₁₋ₗPrₗ)_{y} in order to obtain a higher intrinsic coercive force HcJ, and at that time, 1 is limited to 0.05 or more and 0.7 or less. It is to be noted that if substitution ratio 1 of Pr for Nd is too low, the effect of improving HcJ is small, and if 1 is too high, an absolute value of temperature coefficient **β** related to coercive force of the magnet alloy becomes small, so that there is a concern that the heat resistance may deteriorate. Therefore, 1 is preferably 0.15 or more and 0.6 or less, and further preferably 0.2 or more and 0.5 or less.

In the iron-based rare earth boron-based isotropic magnet alloy of the present invention, one or more metal elements M selected from the group consisting of Al, Si, V, Cr, Ti, Mn, Cu, Zn, Ga, Zr, Nb, Mo, Ag, Hf, Ta, W, Pt, Au, and Pb may be added. By the addition of the metal element M, effects such as improvement of the amorphous forming ability, improvement of the intrinsic coercive force HcJ by uniform refinement of a metal structure after crystallization heat treatment, improvement in the squareness of the demagnetization curve, and the like are obtained, and the magnetic properties are improved. However, when the composition ratio z of these metal elements M exceeds 5.0 atom%, the magnetization decreases, and thus the composition ratio z is limited to a range of 0.0 atom% or more and 5.0 atom% or less. In addition, the composition ratio z is preferably 0.0 atom% or more and 4.0 atom% or less, and more preferably 0.0 atom% or more and 3.0 atom% or less.

### [Metal structure]

In the iron-based rare earth boron-based isotropic magnet alloy of the present invention, when the average crystal grain size of the RE₂Fe₁₄B-type tetragonal compound as the main phase is less than 10 nm, the intrinsic coercive force HcJ decreases, and when the average crystal grain size is 70 nm or more, the squareness of the demagnetization curve decreases due to a decrease in exchange interaction acting between crystal grains. Therefore, for example, in order to realize magnetic properties of a residual magnetic flux density Br of 0.85 T or more, an intrinsic coercive force HcJ of 700 kA/m or more and less than 1400 kA/m, and a maximum energy product (BH) max of 120 kJ/m³ or more, an average crystal grain size of the RE₂Fe₁₄B-type tetragonal compound is limited to a range of 10 nm or more and less than 70 nm. The average crystal grain size of the RE₂Fe₁₄B-type tetragonal compound is preferably 15 nm or more and 60 nm or less, and more preferably 15 nm or more and 50 nm or less.

The average crystal grain size of the RE₂Fe₁₄B-type tetragonal compound means the average value of the equivalent circle diameters of particles present in the field of view when the particle size of each particle is measured at 3 or more points by a line segment method using a transmission electron microscope (TEM).

When the width of the grain boundary phase containing RE and Fe as main components and surrounding the main phase composed of the RE₂Fe₁₄B-type tetragonal compound is less than 1 nm, the bonding force acting between the main phase grains increases, leading to a decrease in the intrinsic coercive force HcJ. In addition, when the width of the grain boundary phase is 10 nm or more, conversely, interparticle bonding is weakened, and the square shape of the demagnetization curve decreases. Therefore, the width of the grain boundary phase is preferably 1 nm or more and less than 10 nm, more preferably 2 nm or more and 8 nm or less, and still more preferably 2 nm or more and 5 nm or less. The width of the grain boundary phase was determined by performing image analysis on a bright field image taken using a scanning transmission electron microscope under the conditions of an acceleration voltage of 200 kV and an observation magnification of 900,000 times.

In the iron-based rare earth boron-based isotropic magnet alloy of the present invention, in the second aspect, in the constituent ratio of the grain boundary phase containing RE and Fe as main components and surrounding the main phase composed of the RE₂Fe₁₄B-type tetragonal compound, it is preferable that the ratio of the main phase is 70 vol% or more and less than 99 vol%, and the ratio of the grain boundary phase is 1 vol% or more and less than 30 vol%. This makes it easy to realize magnetic properties of, for example, a residual magnetic flux density Br of 0.85 T or more, an intrinsic coercive force HcJ of 700 kA/m or more and less than 1400 kA/m, and a maximum energy product (BH) max of 120 kJ/m³ or more. The ratio of the main phase is preferably 80 vol% or more and less than 99 vol%, and more preferably 90 vol% or more and less than 98 vol%. The constituent ratio of the main phase and the grain boundary phase was determined by performing image analysis on a bright field image taken using a scanning transmission electron microscope under the conditions of an acceleration voltage of 200 kV and an observation magnification of 900,000 times.

### [Magnetic properties]

As will be described later, the iron-based rare earth boron-based isotropic magnet of the present invention can exhibit magnetic properties of, for example, a residual magnetic flux density Br of 0.85 T or more, an intrinsic coercive force HcJ of 700 kA/m or more and less than 1200 kA/m, and a maximum energy product (BH) max of 120 kJ/m³ or more. However, in a case of a magnetic circuit configuration in which a reverse magnetic field is likely to be applied to a permanent magnet such as a surface magnet rotor (SPM rotor), when using the iron-based rare earth boron-based isotropic magnet in various rotating machines optimum for electrical equipment and white goods of about 1 horsepower (750 W) or less, the intrinsic coercive force HcJ is preferably 800 kA/m or more and more preferably 950 kA/m or more. When the intrinsic coercive force HcJ is 1400 kA/m or more, magnetizability is significantly reduced, and thus the intrinsic coercive force HcJ is preferably 1300 kA/m or less, and more preferably 1250 kA/m or less. In addition, regarding the residual magnetic flux density Br, in a case where an interior permanent magnet rotor (IPM rotor) or the like is adopted, it is possible to drive at a higher operating point (permeance) than the SPM type. Therefore, although the residual magnetic flux density Br is preferably as high as possible, in consideration of the balance with the intrinsic coercive force HcJ, the residual magnetic flux density Br is preferably 0.87 T or more, and more preferably 0.9 T or more.

The reason why the residual magnetic flux density Br was set to 0.85 T or more as an example is that, in the case of applying to a DC brushless motor as an isotropic bonded magnet, an operating point (permeance Pc) of the magnet is about 3 or more and 10 or less, and thus, in the residual magnetic flux density Br ≥ 0.85 T, an execution magnetic flux Bm which is equivalent to that of an anisotropic Nd-Fe-B sintered magnet with a maximum energy product (BH) max of 300 kJ/m³ or more can be obtained within the range of this Pc. The residual magnetic flux density Br is still more preferably 0.86 T or more.

In addition, the reason why the intrinsic coercive force HcJ was set to 700 kA/m or more as an example is that when the intrinsic coercive force HcJ is less than 700 kA/m, in the case of applying to a DC brushless motor as an isotropic bonded magnet, a heat resistance temperature of the motor of 100°C cannot be secured, and there is a possibility that desired motor characteristics cannot be obtained due to thermal demagnetization. In addition, the reason why the intrinsic coercive force HcJ was set to less than 1400 kA/m is that magnetization is difficult when the intrinsic coercive force HcJ is 1400 kA/m or more, and multipolar magnetization for securing Pc of 3 or more and 10 or less is difficult.

Furthermore, the reason why the maximum energy product (BH) max was set to 120 kJ/m³ or more as an example is that when the maximum energy product (BH) max is less than 120 kJ/m³, the squareness ratio of the demagnetization curve (residual magnetization Jr/saturation magnetization Js) is 0.8 or less, and thus in the case of applying to a DC brushless motor as an isotropic bonded magnet, magnetic properties may be deteriorated due to a reverse magnetic field generated during motor operation, and there is a possibility that desired motor properties cannot be obtained.

A method for manufacturing an iron-based rare earth boron-based isotropic magnet alloy of the present invention includes preparing a molten alloy having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element substantially not containing La and Ce, and M is one or more metal element selected from the group consisting of Al, Si, V, Cr, Ti, Mn, Cu, Zn, Ga, Zr, Nb, Mo, Ag, Hf, Ta, W, Pt, Au, and Pb), in which composition ratios x, y and z satisfy 4.2 atom% ≤ x ≤ 5.6 atom%, 11.5 atom% ≤ y ≤ 13.0 atom%, and 0.0 atom% ≤ z ≤ 5.0 atom%, respectively, and 0.0 ≤ n ≤ 0.5, and injecting the molten alloy onto a surface of a rotating roll containing Cu, Mo, W or an alloy containing at least one of these metals, as a main component, at an average metal tapping rate of 200 g/min or more and less than 2000 g/min per hole of an orifice arranged at the tip of the nozzle to prepare a rapidly solidified alloy having 1 vol% or more of either a crystal phase or an amorphous phase containing an RE₂Fe₁₄B phase. Note that RE is at least one rare earth element substantially not containing La and Ce, but as an example, as described above, RE can be at least one rare earth element necessarily containing at least Nd among Nd and Pr. Details are as described above.

### [Molten metal quenching]

In the method for manufacturing an iron-based rare earth boron-based isotropic magnet alloy of the present invention, a raw material prepared so as to have a predetermined alloy composition is dissolved to form a molten alloy, and then the molten alloy is injected onto the surface of a rotating roll containing Cu, Mo, W or an alloy containing at least one of these metals, as a main component, at an average metal tapping rate of 200 g/min or more and less than 2000 g/min per hole of an orifice arranged at the tip of the nozzle to prepare a rapidly solidified alloy having 1 vol% or more of either a crystal phase or an amorphous phase containing an RE₂Fe₁₄B phase, but when the average metal tapping rate is less than 200 g/min, productivity is poor, and when the average metal tapping rate is 2000 g/min or more, since a molten metal quenched alloy structure containing a coarse α-Fe phase is obtained, there is a possibility that the above-described magnetic properties cannot be obtained even if the crystallization heat treatment is performed. Accordingly, the average metal tapping rate per hole of the orifice arranged at the tip of the nozzle is limited to a range of 200 g/min or more and less than 2000 g/min. The average metal tapping rate is preferably 300 g/min or more and 1500 g/min or less, and more preferably 400 g/min or more and 1300 g/min or less.

The hole arranged at the tip of the nozzle and through which molten metal is tapped is not limited to a circular orifice, but may have any shape such as a square, a triangle, or an ellipse, and have a slit shape as long as the hole has a hole shape that can secure a predetermined molten metal tapping rate. In addition, the nozzle material is allowed as long as it is a refractory material that does not react with or hardly reacts with the molten alloy, but is preferably a ceramic material, SiC, C, or BN with less wear of a nozzle orifice due to the molten metal during tapping, more preferably BN, and still more preferably hard BN containing an additive.

When preparing the rapidly solidified alloy, the rapidly solidified atmosphere is preferably an oxygen-free or low-oxygen atmosphere since an increase in molten metal viscosity can be suppressed by preventing oxidation of the molten alloy, and a stable metal tapping rate can be maintained. In order to realize this atmosphere, it is necessary to perform rapid solidification after evacuating inside of a rapid solidification device to 20 Pa or less, preferably 10 Pa or less, and more preferably 1 Pa or less, then introducing an inert gas into the rapid solidification device, and setting the oxygen concentration in the rapid solidification device to 500 ppm or less, preferably 200 ppm or less, and more preferably 100 ppm or less. As the inert gas, a rare gas such as helium or argon or nitrogen can be used, but since nitrogen is relatively easily reacted with a rare earth element and iron, a rare gas such as helium or argon is preferable, and an argon gas is more preferable from the viewpoint of cost.

In the preparing a rapidly solidified alloy, the rotating roll that quenches the molten alloy contains Cu, Mo, W or an alloy containing at least one of these metals, as a main component, and preferably has a base material containing such a main component. This is because these base materials are excellent in thermal conductivity and durability. In addition, by plating Cr, Ni or a combination thereof on a surface of the base material of the rotating roll, heat resistance and hardness of the surface of the base material of the rotating roll can be enhanced, and melting and deterioration of the surface of the base material of the rotating roll during rapid solidification can be suppressed. The diameter of the rotating roll is, for example, Φ 200 mm or more and Φ 20,000 mm or less. When the rapid solidification time is a short time of 10 sec or less, it is not necessary to cool the rotating roll with water, but when the rapid solidification time exceeds 10 sec, it is preferable to flow cooling water into the rotating roll to suppress the temperature rise of the rotating roll base material. It is preferred that the water cooling capacity of the rotating roll is calculated according to the latent heat of solidification per unit time and the metal tapping rate, and optimally adjusted as appropriate.

### [Flash annealing]

The method for manufacturing an iron-based rare earth boron-based isotropic magnet alloy of the present invention preferably further includes performing flash annealing on the rapidly solidified alloy by making the temperature reach a constant temperature range of a crystallization temperature or higher and 850°C or less at a temperature rising rate of 10°C/sec or more and less than 200°C/sec, and then quenching after a lapse of 0.1 sec or more and less than 7 min, in which, by the performing flash annealing, the method forms a metal structure finer than the single magnetic domain critical diameter of an RE₂Fe₁₄B-type tetragonal compound having the RE₂Fe₁₄B-type tetragonal compound with an average crystal grain size of 10 nm or more and less than 70 nm as a main phase, in which a grain boundary phase with a width of 1 nm or more and less than 10 nm containing RE and Fe as main components and surrounding the main phase is present, while having a B-containing concentration lower than stoichiometric composition of the RE₂Fe₁₄B-type tetragonal compound.

When the temperature rising rate during flash annealing (crystallization heat treatment) is less than 10°C/sec, a fine metal structure cannot be obtained due to excessive grain growth, leading to decreases in the intrinsic coercive force HcJ and the residual magnetic flux density Br. When the temperature rising rate is 200°C/sec or more, the crystal grain growth cannot be made in time, and a metal structure finer than the single magnetic domain critical diameter of the RE₂Fe₁₄B-type tetragonal compound having the RE₂Fe₁₄B-type tetragonal compound with an average crystal grain size of 10 nm or more and less than 70 nm necessary for expression of permanent magnet as a main phase, in which a grain boundary phase with a width of 1 nm or more and less than 10 nm containing RE and Fe as main components and surrounding the main phase is present, is not obtained, leading to deterioration of the magnetic properties as in the case of less than 10°C/sec. Accordingly, the temperature rising rate is preferably 10°C/sec or more and less than 200°C/sec, more preferably 30°C/sec or more and 200°C/sec or less, and still more preferably 40°C/sec or more and 180°C/sec or less.

In the flash annealing (crystallization heat treatment) in the method for manufacturing an iron-based rare earth boron-based isotropic magnet alloy of the present invention, in order to obtain good magnetic properties, it is preferable to immediately quench the alloy after reaching a crystallization heat treatment temperature (holding temperature) in a constant temperature range of a crystallization temperature or higher and 850°C or less. More specifically, it is sufficient that the holding time after reaching the crystallization heat treatment temperature until quenching is substantially 0.1 sec or more, and it is not preferable that the holding time is 7 min or more since uniform and fine metal structures are impaired, leading to deterioration of various magnetic properties. Accordingly, the holding time is preferably 0.1 sec or more and less than 7 min, more preferably 0.1 sec or more and 2 min or less, and still more preferably 0.1 sec or more and 30 sec or less.

In the flash annealing (crystallization heat treatment) in the method for manufacturing an iron-based rare earth boron-based isotropic magnet alloy of the present invention, it is preferable to cool the rapidly solidified alloy to 400°C or less at a temperature drop rate of 2°C/sec or more and 200°C/sec or less. When the temperature drop rate is less than 2°C/sec, coarsening of the crystal structure proceeds, and when the temperature drop rate exceeds 200°C/sec, the alloy may be oxidized. Accordingly, the temperature drop rate is preferably 2°C/sec or more and 200°C/sec or less, more preferably 5°C/sec or more and 200°C/sec or less, and still more preferably 5°C/sec or more and 150°C/sec or less.

The atmosphere of the flash annealing (crystallization heat treatment) is preferably an inert gas atmosphere in order to prevent oxidation of the rapidly solidified alloy. As the inert gas, a rare gas such as helium or argon or nitrogen can be used, but since nitrogen is relatively easily reacted with a rare earth element and iron, a rare gas such as helium or argon is preferable, and an argon gas is more preferable from the viewpoint of cost.

### [Pulverization and molding]

The method for manufacturing an iron-based rare earth boron-based isotropic magnet alloy of the present invention may further include preparing an iron-based rare earth boron-based isotropic magnet alloy powder by pulverizing the rapidly solidified alloy or the rapidly solidified alloy subjected to the flash annealing.

In the rapidly solidified alloy obtained through the above step, a thin band-shaped rapidly solidified alloy may be roughly cut or pulverized to, for example, 50 mm or less before flash annealing (crystallization heat treatment). Furthermore, by forming the magnet alloy of the present invention after flash annealing (crystallization heat treatment) into magnet alloy powder pulverized to an appropriate average powder particle diameter in a range of an average powder particle diameter of 20 µm or more and 200 µm or less, various resin-bonded permanent magnets (commonly called "plastic magnet" or "bonded magnet") can be manufactured by known processes using the magnet alloy powder.

A method for manufacturing a resin-bonded permanent magnet of the present invention, in the first aspect, includes preparing an iron-based rare earth boron-based isotropic magnet alloy powder manufactured by the method for manufacturing an iron-based rare earth boron-based isotropic magnet alloy; and adding a thermosetting resin to the iron-based rare earth boron-based isotropic magnet alloy powder, then filling a molding die with the mixture, forming a compression molded body by compression molding, and then performing heat treatment at a temperature equal to or higher than a polymerization temperature of the thermosetting resin.

A method for manufacturing a resin-bonded permanent magnet of the present invention, in the second aspect, includes preparing an iron-based rare earth boron-based isotropic magnet alloy powder manufactured by the method for manufacturing an iron-based rare earth boron-based isotropic magnet alloy; and adding a thermoplastic resin to the iron-based rare earth boron-based isotropic magnet alloy powder to prepare an injection molding compound, and then performing injection molding.

In the case of preparing the resin-bonded permanent magnet, iron-based rare earth-based nanocomposite magnet powder is mixed with epoxy, polyamide, polyphenylene sulfide (PPS), a liquid crystal polymer, acrylic, polyether, or the like, and molded into a desired shape. At this time, for example, hybrid magnet powder obtained by mixing permanent magnet powder such as SmFeN-based magnet powder or hard ferrite magnet powder may be used.

It is possible to manufacture various rotating machines and various magnetic sensors applicable to automobiles (also including electric vehicles and hybrid vehicles) and white goods as a brushless DC motor of about 1 horsepower (750 W) or less by using the above-described resin-bonded permanent magnet.

When the magnet alloy powder of the present invention is used for an injection-molded bonded magnet, the pulverization is preferably performed so that an average grain size is 100 µm or less, and the more preferable average crystal grain size of the powder is 20 µm or more and 100 µm or less. Also, when the magnet alloy powder is used for a compression-molded bonded magnet, the pulverization is preferably performed so that an average grain size is 200 µm or less, and the more preferable average crystal grain size of the powder is 50 µm or more and 150 µm or less. Still more preferably, the magnet alloy powder has two peaks in the particle size distribution, and the average crystal grain size is 80 µm or more and 130 µm or less.

By subjecting the surface of the magnet alloy powder of the present invention to surface treatment such as coupling treatment or chemical conversion treatment (including phosphoric acid treatment and glass coating treatment), it is possible to improve moldability at the time of molding the resin-bonded permanent magnet and corrosion resistance and heat resistance of the resin-bonded permanent magnet to be obtained regardless of the molding method. In addition, even when the surface of the resin-bonded permanent magnet after molding is subjected to surface treatment such as resin coating, chemical conversion treatment, or plating, it is possible to improve the corrosion resistance and heat resistance of the resin-bonded permanent magnet similarly to the surface treatment of the magnet alloy powder.

Incidentally, the method for manufacturing the iron-based rare earth boron-based isotropic magnet alloy of the present invention is not limited to the above-described methods, and other manufacturing methods can be adopted as long as the iron-based rare earth boron-based isotropic magnet alloy having the above-described composition, average crystal grain size, and the like can be manufactured. For example, when flash annealing is used, it is possible to form a fine metal structure having an RE₂Fe₁₄B-type tetragonal compound with an average crystal grain size of 10 nm or more and less than 70 nm as a main phase, but in order to form such a fine metal structure, the method is not limited to the flash annealing, and other methods can be adopted. For example, even in the case of adopting a normal annealing step instead of flash annealing, when the surface velocity of the rotating roll for quenching the molten alloy is adjusted to form a rapidly solidified alloy structure as a homogeneous fine metal structure composed of crystal grains about 5% to 20% smaller than those of the alloy structure from which optimal magnetic properties can be obtained, good magnetic properties can be obtained.

### Examples

Hereinafter, examples of the present invention will be described. Note that the present invention is not limited only to these examples.

### (Examples)

In order to obtain the alloy composition shown in Table 1, 100 g of a raw material in which additive elements such as Co, Al, Si, V, Cr, Ti, Mn, Cu, Zn, Ga, Zr, Nb, Mo, Ag, Hf, Ta, W, Pt, Au, and Pb were blended in addition to main elements of Nd, Pr, Dy, B, C, and Fe with a purity of 99.5% or more was put into an alumina melting crucible, and then set in a work coil in a vacuum melting furnace. Then, the inside of the vacuum melting furnace was evacuated to 0.02 Pa or less, argon gas was then introduced to normal pressure, and a molten alloy was formed by high frequency induction heating. Thereafter, a molten alloy was cast into a water-cooled copper mold to prepare a mother alloy.

Subsequently, the obtained mother alloy was divided into an appropriate size, and then 40 g of the mother alloy was inserted into a transparent quartz nozzle having, at the bottom, an orifice with an appropriately different diameter (0.7 mm or more and 1.2 mm or less) so as to have an average metal tapping rate (in Table 1, simply shown as "metal tapping rate") described in Table 1, and then the mother alloy was set in a work coil in a single roll quenching device. Then, the inside of the vacuum melting furnace was evacuated to 0.02 Pa or less, argon gas was then introduced until reaching the quenching atmospheric pressure shown in Table 1, the mother alloy was redissolved by highfrequency induction heating, and the molten alloy was tapped from a nozzle orifice at an injection pressure of 30 kPa onto the surface of the rotating roll rotating at the roll surface velocity (Vs) shown in Table 1 to prepare a rapidly solidified alloy. At this time, the distance between the tip of the nozzle and the surface of the rotating roll was set to 0.8 mm. Also, the main component of the rotating roll was copper. In addition, the obtained rapidly solidified alloy had 1 vol% or more of either a crystal phase or an amorphous phase containing an Nd₂Fe₁₄B phase.

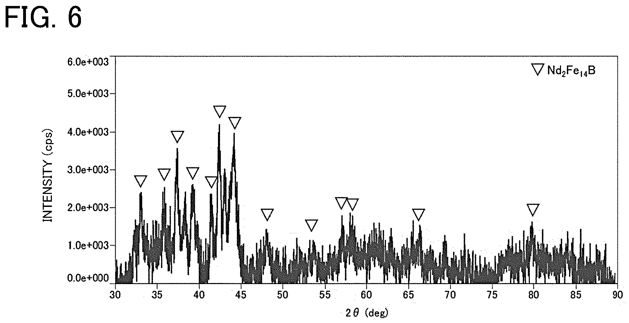

As a representative example, FIG. 6 shows a powder X-ray diffraction profile of the rapidly solidified alloy obtained in Example 13. From FIG. 6, the presence of the Nd₂Fe₁₄B phase was already confirmed in a rapidly solidified state.

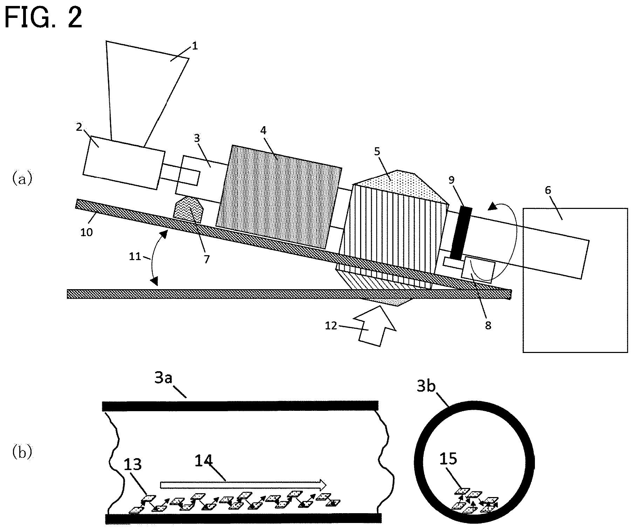

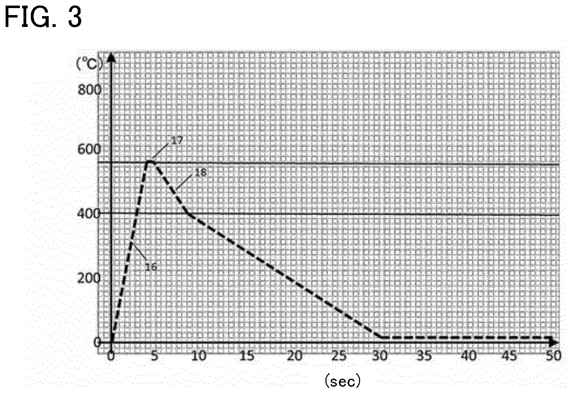

The rapidly solidified alloy obtained in the above step was coarsely pulverized to several mm or less to form a rapidly solidified alloy powder, and then, using a flash annealing furnace (crystallization heat treatment furnace, furnace core tube made of transparent quartz and having an outer diameter of 15 mm × an inner diameter of 12.5 mm × a length of 1000 mm, a heating zone of 300 mm, a cooling zone of 500 mm by a cooling fan), the coarse powder of the rapidly solidified alloy was put into a raw material hopper and heat treatment was performed at a workpiece cutting speed of 20 g/min. Note that furnace core tube inclination angle, furnace core tube rotation speed, and furnace core tube vibration frequency were appropriately adjusted together with the heat treatment temperature and the heat treatment time shown in Table 2 so as to achieve the temperature rising rate shown in Table 2. As a result, the rapidly solidified alloy powder passes through the furnace core tube while performing a movement in which stirring by the furnace core tube rotational movement and a hopping phenomenon by the furnace core tube vibration are combined, so that the rapidly solidified alloy powder was placed under a specific heat treatment condition in which the rapidly solidified alloy powder receives thermal history not integrally but individually. Examples of the heat treatment furnace and the thermal history in the performing flash annealing are shown in FIG. 2 and FIG. 3, respectively.

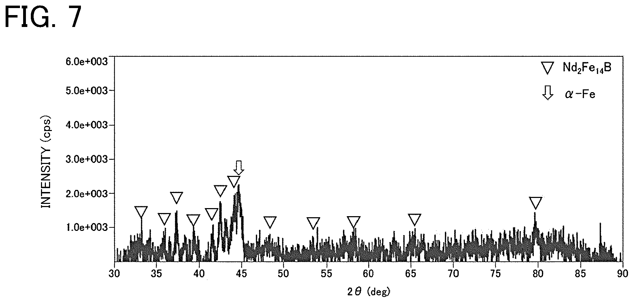

The constituent phase of the rapidly solidified alloy powder after the flash annealing (crystallization heat treatment) was confirmed by powder X-ray diffraction, and the presence of the Nd₂Fe₁₄B phase was confirmed. As a representative example, FIG. 7 shows a powder X-ray diffraction profile of the rapidly solidified alloy after flash annealing (crystallization heat treatment) obtained in Example 13. In addition, a peak of α-Fe that was not observed in FIG. 6 was observed in FIG. 7 after flash annealing (crystallization heat treatment), and it was confirmed to be a metal structure in which the Nd₂Fe₁₄B phase and the α-Fe phase were mixed.

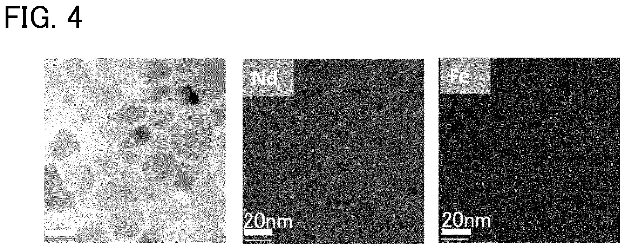

As a representative example, FIG. 4 shows a bright field image and elemental mapping obtained by observing the iron-based rare earth boron-based isotropic magnet alloy obtained in Example 13 with a transmission electron microscope. From the bright field image, the presence of a Nd₂Fe₁₄B phase with an average crystal grain size of 50 nm or less and a clear grain boundary phase surrounding the Nd₂Fe₁₄B phase was confirmed. In addition, in the elemental mapping, it could be confirmed that a grain boundary phase in which Nd and Fe were concentrated was present at the crystal grain boundary of a main phase composed of the main constituent elements of Nd, Fe, and B, and, it was presumed that Fe present at the grain boundary is present as an α-Fe phase, based on the results of the powder X-ray diffraction. It has been confirmed by the present inventor that the grain boundary phase as shown in FIG. 4 is formed in all Examples.

The iron-based rare earth boron-based isotropic magnet alloys obtained by performing the flash annealing (crystallization heat treatment) described in Table 2 were made into samples for evaluation of magnetic properties with a length of about 7 mm × a width of about 0.9 mm or more and 2.3 mm or less × a thickness of 18 µm or more and 25 µm or less, and then magnetized in the longitudinal direction by a pulse application magnetic field of 3.2 MA/m. Thereafter, the sample for evaluation of magnetic properties was set in the longitudinal direction in order to suppress the influence of demagnetizing field, and the results of measuring room temperature magnetic properties with a vibrating sample magnetometer (VSM) are shown in Table 3. From Table 3, it was found that magnetic properties of a residual magnetic flux density Br of 0.85 T or more, an intrinsic coercive force HcJ of 700 kA/m or more and less than 1400 kA/m, and a maximum energy product (BH) max of 120 kJ/m³ or more described above were obtained by the alloy composition and manufacturing method described in Examples 1 to 39. In particular, it was found that the intrinsic coercive force HcJ of Examples 32 to 39 containing Pr was higher than that of Examples 1 to 31.

Subsequently, the magnetic powder subjected to flash annealing (crystallization heat treatment) obtained in Example 13 was pulverized with a pin disc mill so as to have an average grain size of 125 µm. Then, 2 mass% of an epoxy resin diluted with methyl ethyl ketone (MEK) was added to the pulverized magnetic powder, and the mixture was mixed and kneaded. Thereafter, 0.1 mass% of calcium stearate was added thereto as a lubricant to prepare a compound for a compression-molded bonded magnet.

The compound for a compression-molded bonded magnet was compression molded at a pressure of 1568 MPa (16 ton/cm²) to obtain a compression molded body having a shape of a diameter of 10 mm × a height of 7 mm, and then this compression molded body was subjected to a curing heat treatment (curing) at 180°C for 1 hour in an argon gas atmosphere to obtain an isotropic compression-molded bonded magnet. Since the obtained isotropic compression-molded bonded magnet had a molded body density of 6.3 g/cm³ (true specific gravity of magnetic powder: 7.5 g/cm³), the magnetic powder filling rate was 84 vol%.

The magnetic properties of the isotropic compression-molded bonded magnet obtained using the magnetic powder of Example 13 were measured by a BH tracer after being magnetized in the longitudinal direction with a pulse applied magnetic field of 3.2 MA/m, and it was found that the isotropic compression-molded bonded magnet exhibits magnetic properties of a residual magnetic flux density Br of 0.74 T, an intrinsic coercive force HcJ of 1028 kA/m, and a maximum energy product (BH) max of 89.4 kJ/m³.

Next, the magnetic powder subjected to flash annealing (crystallization heat treatment) obtained in Example 13 was pulverized with a pin disc mill so as to have an average grain size of 75 µm. Then, the pulverized magnetic powder was subjected to a coupling treatment by spraying a titanate-based coupling agent so as to be 0.75 mass% while heating and stirring the pulverized magnetic powder, 0.5 mass% of stearic acid amide as a lubricant and 4.75 mass% of nylon 12 resin powder were added and mixed, and then a compound for an injection-molded bonded magnet was prepared at an extrusion temperature of 170°C using a continuous extrusion kneader.

Using the compound for an injection-molded bonded magnet, injection molding was performed at an injection temperature of 250°C to prepare an isotropic injection-molded bonded magnet having a shape of a diameter of 10 mm × a height of 7 mm. Since the obtained isotropic injection-molded bonded magnet had a molded body density of 4.6 g/cm³ (true specific gravity of magnetic powder: 7.5 g/cm³), the magnetic powder filling factor was 61 vol%.

The magnetic properties of the isotropic injection-molded bonded magnet obtained using the magnetic powder of Example 13 were measured by a BH tracer after being magnetized in the longitudinal direction with a pulse application magnetic field of 3.2 MA/m, and it was found that the isotropic injection-molded bonded magnet exhibits magnetic properties of a residual magnetic flux density Br of 0.54 T, an intrinsic coercive force HcJ of 1014 kA/m, and a maximum energy product (BH) max of 63.4 kJ/m³, and magnetic properties equivalent to those of a general isotropic Nd-Fe-B compression-molded bonded magnet were obtained even by injection molding.

### (Comparative Example)

In order to obtain the alloy composition shown in Table 1, 100 g of a raw material in which additive elements such as Co, Si, Ti, and Zr were blended in addition to main elements of Nd, Dy, B, and Fe with a purity of 99.5% or more was put into an alumina melting crucible, and then set in a work coil in a vacuum melting furnace. Then, the inside of the vacuum melting furnace was evacuated to 0.02 Pa or less, argon gas was then introduced to normal pressure, and a molten alloy was formed by high frequency induction heating. Thereafter, a molten alloy was cast into a water-cooled copper mold to prepare a mother alloy.

Subsequently, the obtained mother alloy was divided into an appropriate size, and then 40 g of the mother alloy was inserted into a transparent quartz nozzle having, at the bottom, an orifice with an appropriately different diameter (0.7 mm or more and 1.2 mm or less) so as to have an average metal tapping rate (in Table 1, simply shown as "metal tapping rate") described in Table 1, and then the mother alloy was set in a work coil in a single roll quenching device. Then, the inside of the vacuum melting furnace was evacuated to 0.02 Pa or less, argon gas was then introduced until reaching the quenching atmospheric pressure shown in Table 1, the mother alloy was redissolved by highfrequency induction heating, and the molten alloy was tapped from a nozzle orifice at an injection pressure of 30 kPa onto the surface of the rotating roll rotating at the roll surface velocity (Vs) shown in Table 1 to prepare a rapidly solidified alloy. At this time, the distance between the tip of the nozzle and the surface of the rotating roll was set to 0.8 mm.

The rapidly solidified alloy obtained in the above step was coarsely pulverized to several mm or less to form a rapidly solidified alloy powder, and then, using a flash annealing furnace (crystallization heat treatment furnace, furnace core tube made of transparent quartz and having an outer diameter of 15 mm × an inner diameter of 12.5 mm × a length of 1000 mm, a heating zone of 300 mm, a cooling zone of 500 mm by a cooling fan), the coarse powder of the rapidly solidified alloy was put into a raw material hopper and heat treatment was performed at a workpiece cutting speed of 20 g/min. Note that furnace core tube inclination angle, furnace core tube rotation speed, and furnace core tube vibration frequency were appropriately adjusted together with the heat treatment temperature and the heat treatment time shown in Table 2 so as to achieve the temperature rising rate shown in Table 2.

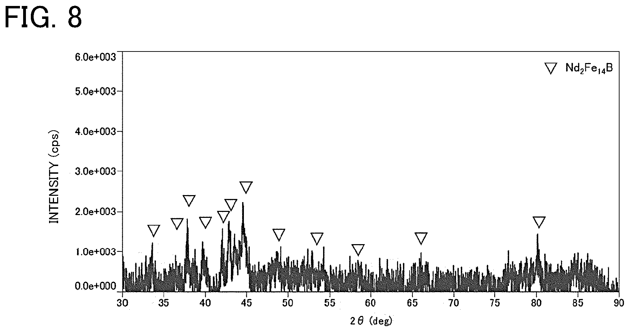

The constituent phase of the rapidly solidified alloy powder after the flash annealing (crystallization heat treatment) was confirmed by powder X-ray diffraction, and the presence of the Nd₂Fe₁₄B phase was confirmed. As a representative example, FIG. 8 shows a powder X-ray diffraction profile of the rapidly solidified alloy after flash annealing (crystallization heat treatment) obtained in Comparative Example 7. From FIG. 8, it was confirmed that Comparative Example 7 is a single-phase metal structure having the Nd₂Fe₁₄B phase as a main phase.

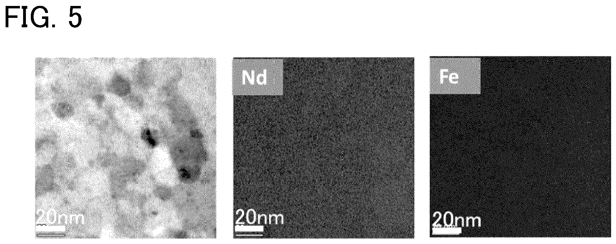

As a representative example, FIG. 5 shows a bright field image and elemental mapping obtained by observing the iron-based rare earth boron-based isotropic magnet alloy obtained in Comparative Example 7 with a transmission electron microscope. In the bright field image, the Nd₂Fe₁₄B phase with an average crystal grain size of 50 nm or less could be confirmed, but a clear grain boundary phase could not be confirmed. In addition, also from the elemental mapping, it was found that there was no grain boundary phase in which Nd and Fe were concentrated as seen in Example 13 at the crystal grain boundary of the main phase composed of the main constituent elements of Nd, Fe, and B. The same applies to the other comparative examples.

The iron-based rare earth boron-based isotropic magnet alloys obtained by performing the flash annealing (crystallization heat treatment) described in Table 2 were made into samples for evaluation of magnetic properties with a length of about 7 mm × a width of about 0.9 mm or more and 2.3 mm or less × a thickness of 18 µm or more and 25 µm or less, and then magnetized in the longitudinal direction by a pulse application magnetic field of 3.2 MA/m. Thereafter, the sample for evaluation of magnetic properties was set in the longitudinal direction in order to suppress the influence of demagnetizing field, and the results of measuring room temperature magnetic properties with a vibrating sample magnetometer (VSM) are shown in Table 3. From Table 3, it was found that magnetic properties of a residual magnetic flux density Br of 0.85 T or more, an intrinsic coercive force HcJ of 700 kA/m or more and less than 1400 kA/m, and a maximum energy product (BH) max of 120 kJ/m³ or more described above were not obtained by the alloy composition and manufacturing method described in Comparative Examples 1 to 12.

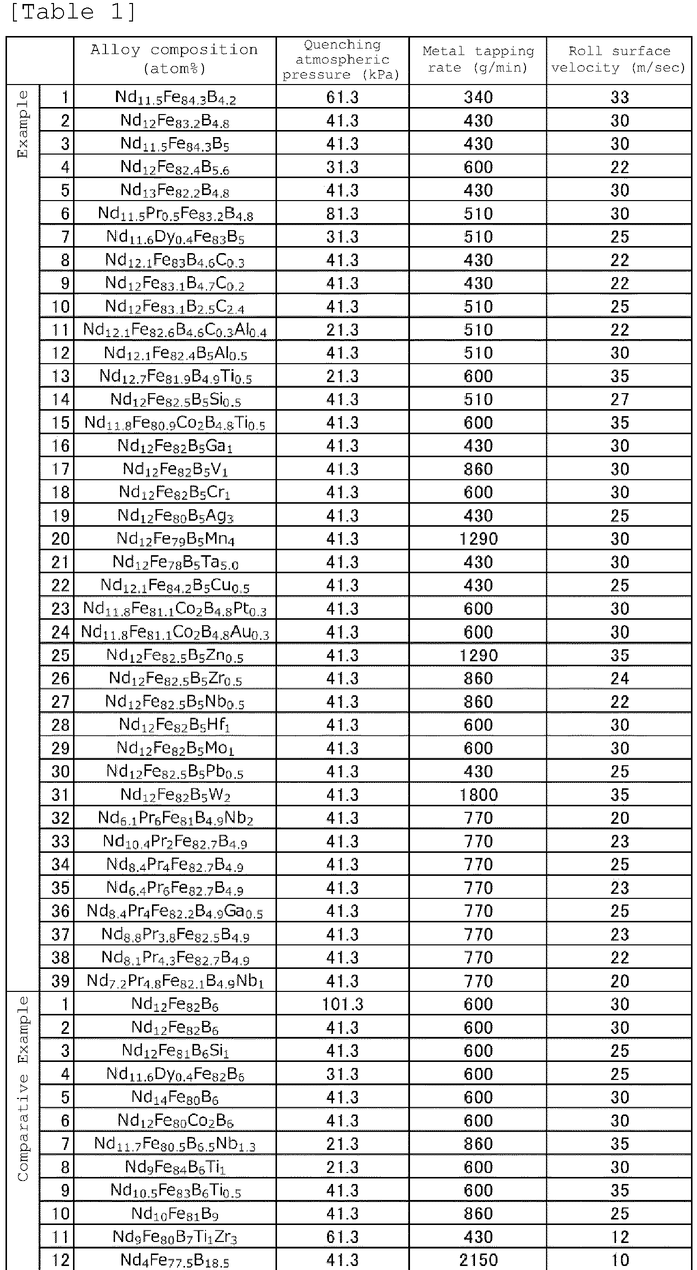

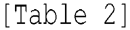

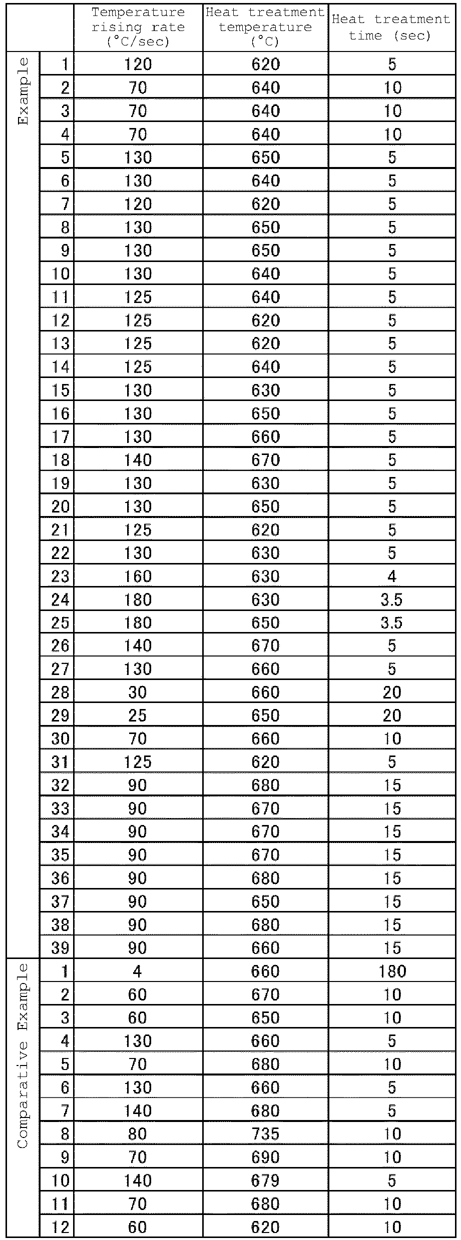

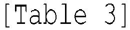

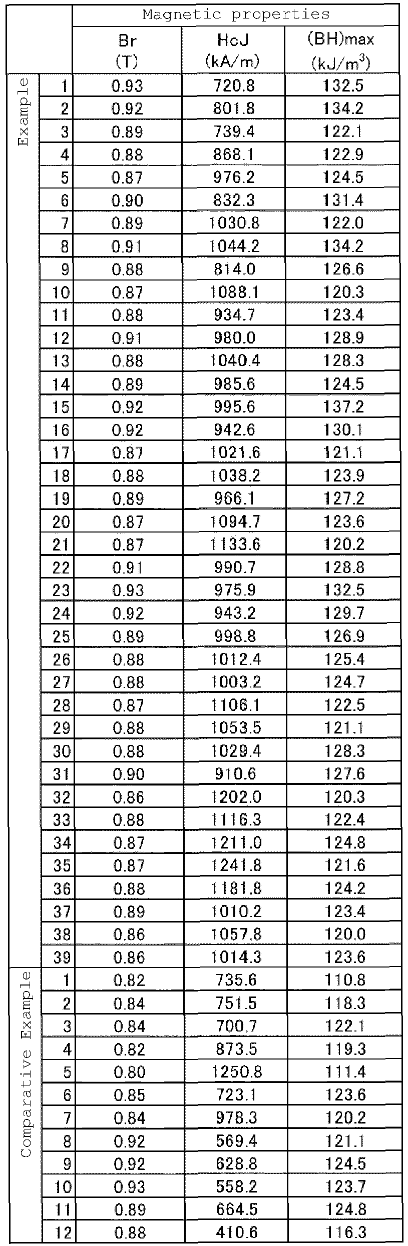

### Reference Signs List

- 1: raw material hopper
- 2: raw material supply feeder
- 3: furnace core tube
- 3a: furnace core tube enlarged view
- 3b: furnace core tube cross-sectional enlarged view
- 4: tubular furnace
- 5: cooling tower
- 6: collection hopper
- 7: vibrator
- 8: furnace core tube rotating motor
- 9: furnace core tube rotation axis
- 10: device frame
- 11: furnace core tube inclination angle
- 12: cooling fan air
- 13: rapidly solidified alloy powder (workpiece)
- 14: moving direction of workpiece
- 15: hopping phenomenon of workpiece
- 16: temperature rising rate
- 17: holding temperature
- 18: temperature drop rate
- 21: main phase
- 22: grain boundary phase

## Claims

1. An iron-based rare earth boron-based isotropic magnet alloy, which has an alloy composition having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb),
wherein composition ratios x, y and z satisfy
4.2 atom% ≤ x ≤ 5.6 atom%,
11.5 atom% ≤ y ≤ 13.0 atom%, and
0.0 atom% ≤ z ≤ 5.0 atom%, respectively, and
0.0 ≤ n ≤ 0.5, and
has a metal structure finer than a single magnetic domain critical diameter of an RE₂Fe₁₄B-type tetragonal compound comprising the RE₂Fe₁₄B-type tetragonal compound with an average crystal grain size of 10 nm or more and less than 70 nm as a main phase while having a B-containing concentration lower than stoichiometric composition of the RE₂Fe₁₄B-type tetragonal compound.

2. An iron-based rare earth boron-based isotropic magnet alloy, which has an alloy composition having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element necessarily containing at least Nd among Nd and Pr, and M is one or more metal element selected from the group consisting of Al, Si, V, Cr, Ti, Mn, Cu, Zn, Ga, Zr, Nb, Mo, Ag, Hf, Ta, W, Pt, Au, and Pb),
wherein composition ratios x, y and z satisfy
4.2 atom% ≤ x ≤ 5.6 atom%,
11.5 atom% ≤ y ≤ 13.0 atom%, and
0.0 atom% ≤ z ≤ 5.0 atom%, respectively, and
0.0 ≤ n ≤ 0.5, and
has a metal structure comprising an RE₂Fe₁₄B-type tetragonal compound with an average crystal grain size of 10 nm or more and less than 70 nm as a main phase, in which a grain boundary phase surrounding the main phase is present, while having a B-containing concentration lower than stoichiometric composition of the RE₂Fe₁₄B-type tetragonal compound.

3. The iron-based rare earth boron-based isotropic magnet alloy according to claim 2, having a metal structure finer than a single magnetic domain critical diameter of the RE₂Fe₁₄B-type tetragonal compound,
wherein the grain boundary phase surrounding the main phase comprising the RE₂Fe₁₄B-type tetragonal compound comprises RE and Fe as main components.

4. The iron-based rare earth boron-based isotropic magnet alloy according to claim 3, wherein the grain boundary phase comprising RE and Fe as main components and surrounding the main phase comprising the RE₂Fe₁₄B-type tetragonal compound is a ferromagnetic phase.

5. The iron-based rare earth boron-based isotropic magnet alloy according to claim 3 or 4, wherein a width of the grain boundary phase comprising RE and Fe as main components and surrounding the main phase comprising the RE₂Fe₁₄B-type tetragonal compound is 1 nm or more and less than 10 nm.

6. The iron-based rare earth boron-based isotropic magnet alloy according to any one of claims 3 to 5, wherein, in constituent ratio of the grain boundary phase comprising RE and Fe as main components and surrounding the main phase comprising the RE₂Fe₁₄B-type tetragonal compound, a ratio of the main phase is 70 vol% or more and less than 99 vol%, and a ratio of the grain boundary phase is 1 vol% or more and less than 30 vol%.

7. The iron-based rare earth boron-based isotropic magnet alloy according to any one of claims 1 to 6, which exhibits magnetic properties of a residual magnetic flux density Br of 0.85 T or more, an intrinsic coercive force HcJ of 700 kA/m or more and less than 1400 kA/m, and a maximum energy product (BH) max of 120 kJ/m³ or more.

8. The iron-based rare earth boron-based isotropic magnet alloy according to any one of claims 1 to 7, wherein the RE comprises at least Nd and Pr.

9. A method for manufacturing an iron-based rare earth boron-based isotropic magnet alloy, the method comprising preparing a molten alloy having a composition represented by composition formula T_{100-x-y-z}(B₁₋ₙCₙ)ₓRE_{y}M_{z} (T is at least one element selected from the group consisting of Fe, Co, and Ni, and is a transition metal element necessarily containing Fe, RE is at least one rare earth element substantially not containing La and Ce, and M is one or more metal element selected from the group consisting of Al, Si, V, Cr, Ti, Mn, Cu, Zn, Ga, Zr, Nb, Mo, Ag, Hf, Ta, W, Pt, Au, and Pb),
wherein composition ratios x, y and z satisfy
4.2 atom% ≤ x ≤ 5.6 atom%,
11.5 atom% ≤ y ≤ 13.0 atom%, and
0.0 atom% ≤ z ≤ 5.0 atom%, respectively, and
0.0 ≤ n ≤ 0.5, and
injecting the molten alloy onto a surface of a rotating roll comprising Cu, Mo, W or an alloy containing at least one of these metals, as a main component, at an average metal tapping rate of 200 g/min or more and less than 2000 g/min per hole of an orifice arranged at a tip of a nozzle to prepare a rapidly solidified alloy having 1 vol% or more of either a crystal phase or an amorphous phase containing an RE₂Fe₁₄B phase.

10. The method for manufacturing an iron-based rare earth boron-based isotropic magnet alloy according to claim 9, further comprising performing flash annealing on the rapidly solidified alloy by making a temperature reach a constant temperature range of a crystallization temperature or higher and 850°C or less at a temperature rising rate of 10°C/sec or more and less than 200°C/sec, and then quenching after a lapse of 0.1 sec or more and less than 7 min,
wherein, by the performing flash annealing, the method forms a metal structure finer than a single magnetic domain critical diameter of an RE₂Fe₁₄B-type tetragonal compound comprising the RE₂Fe₁₄B-type tetragonal compound with an average crystal grain size of 10 nm or more and less than 70 nm as a main phase, in which a grain boundary phase with a width of 1 nm or more and less than 10 nm comprising RE and Fe as main components and surrounding the main phase is present, while having a B-containing concentration lower than stoichiometric composition of the RE₂Fe₁₄B-type tetragonal compound.

11. The method for manufacturing an iron-based rare earth boron-based isotropic magnet alloy according to claim 9 or 10, further comprising preparing an iron-based rare earth boron-based isotropic magnet alloy powder by pulverizing the rapidly solidified alloy or the rapidly solidified alloy subjected to the flash annealing.

12. A method for manufacturing a resin-bonded permanent magnet, comprising:
preparing the iron-based rare earth boron-based isotropic magnet alloy powder manufactured by the method for manufacturing an iron-based rare earth boron-based isotropic magnet alloy according to claim 11; and
adding a thermosetting resin to the iron-based rare earth boron-based isotropic magnet alloy powder, then filling a molding die with a mixture, forming a compression molded body by compression molding, and then performing heat treatment at a temperature equal to or higher than a polymerization temperature of the thermosetting resin.

13. A method for manufacturing a resin-bonded permanent magnet, comprising:
preparing the iron-based rare earth boron-based isotropic magnet alloy powder manufactured by the method for manufacturing an iron-based rare earth boron-based isotropic magnet alloy according to claim 11; and
adding a thermoplastic resin to the iron-based rare earth boron-based isotropic magnet alloy powder to prepare an injection molding compound, and then performing injection molding.
